# FASCICULE DE BREVET EUROPEEN

(11) **EP 3 774 444 B1**
(45) Date de publication et mention de la délivrance du brevet: **30.03.2022**
(21) Numéro de dépôt: 19718312.2
(22) Date de dépôt: 12.04.2019
(51) Int. Cl.: B60N 2/58, B60R 13/02

(54) **COUCHE DE DÉCOR POUR COMPOSANT DE VÉHICULE AUTOMOBILE**
DEKORSCHICHT FÜR EIN KRAFTFAHRZEUGBAUTEIL
DECORATIVE LAYER FOR A MOTOR VEHICLE COMPONENT

(30) Priorité: 12.04.2018 FR 1853228
(43) Date de publication de la demande: 17.02.2021
(73) Titulaire: TESCA Pacific, 92977 Paris La Défense Cedex (FR)
(72) Inventeur: PONSIN, Aurélie, 75008 Paris (FR); SALIOU, Lucile, 75008 Paris (FR); MOUGEL, Thierry, 75008 Paris (FR)
(74) Mandataire: Sayettat, Julien Christian
(86) Numéro de dépôt international: PCT/EP2019/059464
(87) Numéro de publication internationale: WO 2019/197627

(56) Documents cités:
- WO-A1-2015/173494
- WO-A1-2017/144831
- FR-A1- 3 049 907

## Description

L'invention concerne une couche de décor pour composant de véhicule automobile, un composant comprenant une telle couche et un procédé de réalisation d'une telle couche.

Il est connu dans le document WO 2015/173494 de réaliser une couche de décor pour composant de véhicule automobile, ladite couche comprenant deux formats de matériau de revêtement associés par couture par deux bordures respectives.

Usuellement, la couture est réalisée en repliant les bordures des formats face d'endroit contre face d'endroit et en réalisant une couture à distance - notamment de quelques millimètres - des bords libres desdites bordures, de manière à définir un talon de couture correspondant à la zone s'étendant entre ladite couture et lesdits bords libres.

Avec une telle façon de faire, on observe en vue vers les faces d'endroit un creux au niveau de la couture, ce qui peut présenter un inconvénient esthétique et aussi un risque d'accumulation de poussière dans ledit creux au cours de l'utilisation du composant.

L'invention a pour but de pallier ces inconvénients.

A cet effet, et selon un premier aspect, l'invention propose une couche de décor pour composant de véhicule automobile, ladite couche comprenant deux formats de matériau de revêtement associés par couture par deux bordures respectives, ladite couche présentant les caractéristiques suivantes :
- ladite couture est sous forme de point zigzag ou de point de recouvrement associant lesdits formats bord à bord,
- ladite couche comprend en outre une bande de renfort s'étendant en faces d'envers desdits formats et le long de ladite couture, ladite bande étant prise dans ladite couture,
- ladite couche comprend en outre une bande décorative fixée en face d'endroit desdits formats et le long de ladite couture de manière à la masquer.

Le fait de réaliser une couture par point zigzag ou de point de recouvrement permet de disposer les formats bord à bord sans réalisation d'un talon de couture.

L'utilisation d'une bande de renfort se justifie par le fait qu'une couture sous forme de point zigzag ou de point de recouvrement présente une résistance modérée.

On notera ici que la bande décorative participe aussi, dans une certaine mesure, au renfort.

Avec l'agencement proposé, on n'observe plus en vue vers les faces d'endroit un creux au niveau de la couture, ce qui améliore l'esthétique et supprime tout risque d'accumulation de poussière au niveau de la couture.

Selon un autre aspect, l'invention propose un composant comprenant une telle couche.

D'autres particularités et avantages de l'invention apparaîtront dans la description qui suit, faite en référence aux figures jointes, dans lesquelles :
- la figure 1 est une vue schématique partielle de face, vers les faces d'endroit, d'une couche de décor selon une réalisation,
- les figures 2a, 2b, 2c sont des vues schématiques partielles en perspective semi-éclatée d'une couche de décor selon trois réalisations différentes,

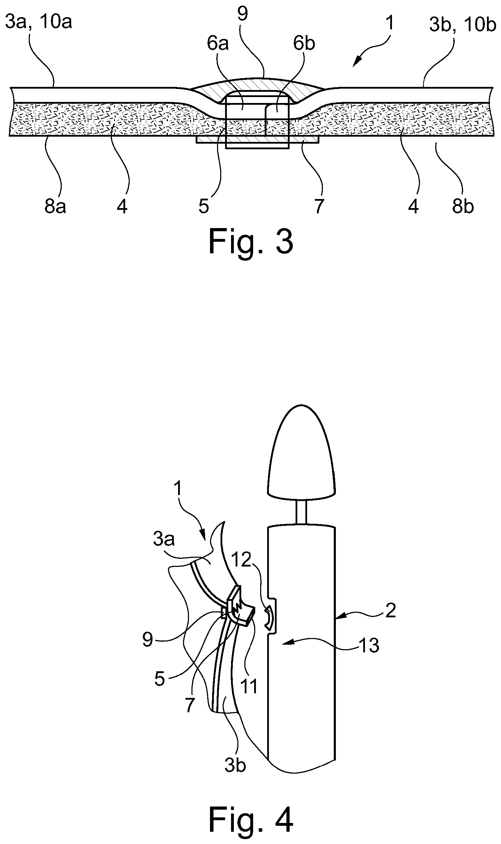

- la figure 3 est une vue schématique partielle en coupe correspondant à la figure 2a,
- la figure 4 est une vue schématique partielle en coupe d'un composant sous forme de matelassure de siège comprenant une couche selon la figure 2c.

En référence aux figures, on décrit une couche de décor 1 pour composant 2 de véhicule automobile, ladite couche comprenant deux formats 3a,3b de matériau de revêtement - par exemple à base de tissu ou de cuir pourvu d'une sous couche en mousse 4 - associés par couture 5 par deux bordures 6a,6b respectives, ladite couche présentant les caractéristiques suivantes :
- ladite couture est sous forme de point zigzag, selon les réalisations représentées, ou de point de recouvrement, selon une réalisation non représentée, associant lesdits formats bord à bord,
- ladite couche comprend en outre une bande de renfort 7 s'étendant en faces d'envers 8a,8b desdits formats et le long de ladite couture, ladite bande étant prise dans ladite couture,
- ladite couche comprend en outre une bande décorative 9 fixée en face d'endroit 10a,10b desdits formats et le long de ladite couture de manière à la masquer.

Selon une réalisation, la bande de renfort 7 est à base de non tissé ou de feuille thermoplastique.

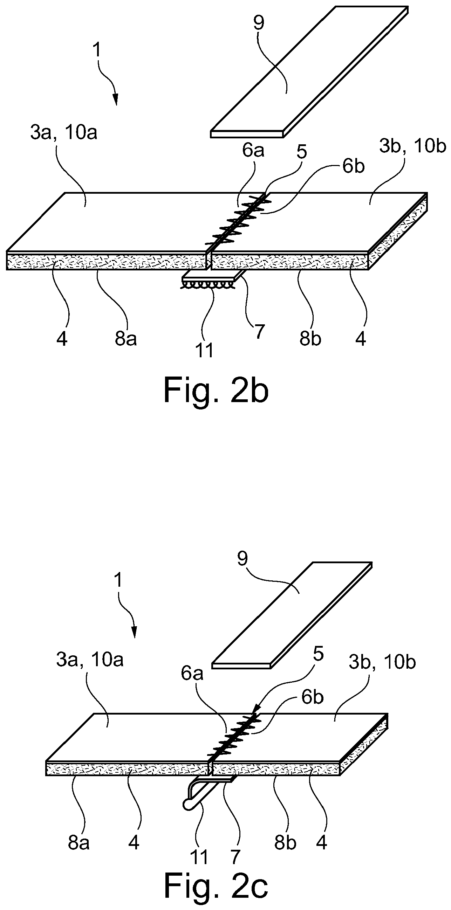

Selon les réalisations représentées en figures 2b et 2c, la bande de renfort 7 est pourvue de moyens d'arrimage 11 destinés à coopérer avec des moyens réciproques 12 prévus sur un support 13 du composant 2, de manière à permettre l'assemblage de ladite couche sur ledit composant.

Selon la réalisation représentée en figure 2b, les moyens d'arrimage 11 sont sous forme de bande agrippante - notamment de type Velcro ^{®} - destinée à coopérer avec une bande agrippante complémentaire, non représentée, formant les moyens réciproques 12.

Selon la réalisation représentée en figure 2c, les moyens d'arrimage 11 sont sous forme de bourrelet en matériau thermoplastique profilé surmoulant un bord de la bande de renfort 7, ledit bourrelet étant destiné à être disposé dans un profilé complémentaire, non représenté, formant les moyens réciproques 12.

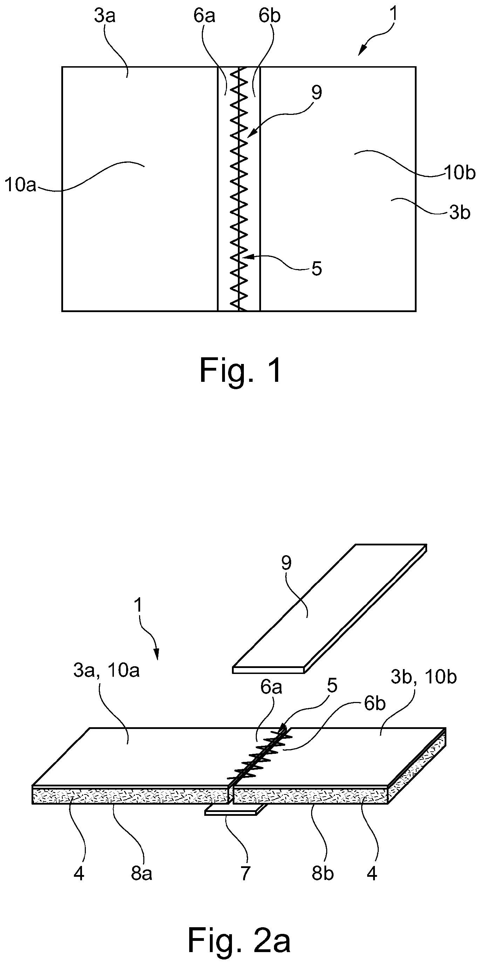

Selon la réalisation de la figure 2a, la couche de décor 1 est dépourvue de moyens d'arrimage 11, ladite couche étant par exemple destinée à être collée sur le support 13 ou surmoulée par ledit support, comme on le verra plus loin.

Selon une réalisation, la bande décorative 9 est à base de feuille thermoplastique, de tissu ou de non tissé.

Selon diverses réalisations, la bande décorative 9 est fixée par un adhésif ou par une soudure.

On décrit maintenant un composant 2 de véhicule automobile comprenant un support 13 et une couche de décor 1, ladite couche étant fixée sur ledit support.

Selon une réalisation, le composant 2 est sous forme de matelassure de siège dont le support 13 est sous forme d'un coussin pourvu de moyens d'arrimage réciproques 12.

Selon une autre réalisation non représentée, le composant 2 est sous forme de matelassure de siège dont le support 13 est sous forme d'un coussin en mousse - notamment de polyuréthanne - surmoulant au moins en partie l'envers de la couche de décor 1.

Selon d'autres réalisations, le composant 2 peut notamment être un pavillon, une ébénisterie, un panneau d'habillage de porte, une planche de bord.

On décrit enfin un procédé de réalisation d'une couche de décor 1 selon une réalisation.

Le procédé comprend les étapes suivantes :
- prévoir deux formats 3a,3b de matériau de revêtement, une bande de renfort 7 et une bande décorative 9,
- associer lesdits formats par couture 5 par deux bordures 6a,6b respectives, ladite couture étant sous forme de point zigzag ou de point de recouvrement associant lesdits formats bord à bord et prenant ladite bande de renfort préalablement disposée en faces d'envers 8a,8b desdits formats,
- fixer ladite bande décorative - par exemple par collage ou soudage - en face d'endroit 10a,10b desdits formats de manière à masquer ladite couture.

## Revendications

1. Couche de décor (1) pour composant (2) de véhicule automobile, ladite couche comprenant deux formats (3a,3b) de matériau de revêtement associés par couture (5) par deux bordures (6a,6b) respectives, ladite couture est sous forme de point zigzag ou de point de recouvrement associant lesdits formats bord à bord,
ladite couche comprenant en outre une bande décorative (9) fixée en face d'endroit desdits formats et le long de ladite couture de manière à la masquer, ladite couche étant **caractérisée en ce qu'**elle comprend en outre une bande de renfort (7) s'étendant en faces d'envers (8a,8b) desdits formats et le long de ladite couture, ladite bande étant prise dans ladite couture.

2. Couche selon la revendication 1 **caractérisée en ce que** la bande de renfort (7) est à base de non tissé ou de feuille thermoplastique.

3. Couche selon l'une des revendications 1 ou 2, **caractérisée en ce que** la bande de renfort (7) est pourvue de moyens d'arrimage (11) destinés à coopérer avec des moyens réciproques (12) prévus sur un support (13) du composant (2), de manière à permettre l'assemblage de ladite couche sur ledit composant.

4. Couche selon la revendication 3, **caractérisée en ce que** :
• les moyens d'arrimage (11) sont sous forme de bande agrippante, destinée à coopérer avec une bande agrippante complémentaire formant les moyens réciproques (12),
• et/ou les moyens d'arrimage (11) sont sous forme de bourrelet en matériau thermoplastique profilé surmoulant un bord de la bande de renfort (7), ledit bourrelet étant destiné à être disposé dans un profilé complémentaire formant les moyens réciproques (12).

5. Couche selon l'une quelconque des revendications 1 à 4, **caractérisée en ce que** la bande décorative (9) est à base de feuille thermoplastique, de tissu ou de non tissé.

6. Couche selon l'une quelconque des revendication 1 à 5, **caractérisé en ce que** la bande décorative (9) est fixée par un adhésif ou par une soudure.

7. Composant (2) de véhicule automobile comprenant un support (13) et une couche (1) selon l'une quelconque des revendications 1 à 6, ladite couche étant fixée sur ledit support.

8. Composant selon la revendication 7, quand elle se rattache à la revendication 3, **caractérisé en ce qu'**il est sous forme de matelassure de siège dont le support (13) est sous forme d'un coussin pourvu de moyens d'arrimage réciproques (12).

9. Composant selon la revendication 7, **caractérisé en ce qu'**il est sous forme de matelassure de siège dont le support (13) est sous forme d'un coussin en mousse surmoulant au moins en partie l'envers de la couche de décor (1).

## Patentansprüche

1. Dekorschicht (1) für ein Bauteil (2) eines Kraftfahrzeugs, wobei die Schicht zwei Formate (3a, 3b) eines Beschichtungsmaterials umfasst, die durch Nähen (5) durch zwei jeweilige Säume (6a, 6b) verbunden sind, wobei die Naht in Form eines Zick-Zack-Stiches oder Coverstiches erfolgt, der die Formate Kante an Kante verbindet,
wobei die Schicht weiter ein dekoratives Band (9) umfasst, das an der Vorderseite der Formate und entlang der Naht derart befestigt ist, um diese zu verbergen, wobei die Schicht **dadurch gekennzeichnet ist, dass** sie weiter ein Verstärkungsband (7) umfasst, das sich auf Rückseiten (8a, 8b) der Formate und entlang der Naht erstreckt, wobei das Band in der Naht aufgenommen ist.

2. Schicht nach Anspruch 1, **dadurch gekennzeichnet, dass** das Verstärkungsband (7) auf Basis von Vlies oder einer thermoplastischen Folie ist.

3. Schicht nach einem der Ansprüche 1 oder 2, **dadurch gekennzeichnet, dass** das Verstärkungsband (7) mit Koppelungsmitteln (11) versehen ist, die dazu bestimmt sind, mit wechselseitigen Mitteln (12) zusammenzuwirken, die auf einer Haltung (13) des Bauteils (2) vorgesehen sind, um das Zusammensetzen der Schicht mit dem Bauteil zu erlauben.

4. Schicht nach Anspruch 3, **dadurch gekennzeichnet, dass**:
• die Koppelungsmittel (11) in Form eines Klettbandes sind, das dazu bestimmt ist, mit einem ergänzenden Klettband, das die wechselseitigen Mittel (12) bildet, zusammenzuwirken,
• und/oder die Koppelungsmittel (11) in Form eines Wulstes aus profiliertem thermoplastischem Material sind, der um eine Kante des Verstärkungsbandes (7) herumgeformt ist, wobei der Wulst dazu bestimmt ist, in einem ergänzenden Profil, das die wechselseitigen Mittel (12) bildet, angeordnet zu werden.

5. Schicht nach einem der Ansprüche 1 bis 4, **dadurch gekennzeichnet, dass** das dekorative Band (9) auf Basis einer thermoplastischen Folie, aus Gewebe oder Vlies ist.

6. Schicht nach einem der Ansprüche 1 bis 5, **dadurch gekennzeichnet, dass** das dekorative Band (9) durch einen Kleber oder durch Verschweißen befestigt wird.

7. Bauteil (2) eines Kraftfahrzeugs, eine Halterung (13) und eine Schicht (1) nach einem der Ansprüche 1 bis 6 umfassend, wobei die Schicht auf der Halterung befestigt ist.

8. Bauteil nach Anspruch 7, wenn an Anspruch 3 anhängig, **dadurch gekennzeichnet, dass** es in Form einer Sitzpolsterung ist, deren Halterung (13) in Form eines Kissens ist, das mit gegenseitigen Koppelungsmitteln (12) versehen ist.

9. Bauteil nach Anspruch 7, **dadurch gekennzeichnet, dass** es in Form einer Sitzpolsterung ist, deren Halterung (13) in Form eines Kissens aus Schaumstoff ist, das mindestens teilweise um die Rückseite der Dekorschicht (1) herumgeformt ist.

## Claims

1. Decorative layer (1) for a motor vehicle component (2), said layer comprising two formats (3a, 3b) of coating material associated by a seam (5) by two respective edges (6a, 6b), said seam is in the form of a zigzag stich or cover stitch associating said formats edge to edge, said layer further comprising a decorative strip (9) attached to the obverse side of said formats and along said seam so as to hide it, said layer being **characterised in that** it further comprises a reinforcing strip (7) extending on the reverse sides (8a, 8b) of said formats and along said seam, said strip being caught in said seam.

2. Layer according to claim 1, **characterised in that** the reinforcing strip (7) is made of non-woven material or a thermoplastic sheet.

3. Layer according to either of claims 1 or 2, **characterised in that** the reinforcing strip (7) is provided with fastening means (11) intended to cooperate with reciprocal means (12) provided on a support (13) of the component (2) so as to allow said layer to be assembled on said component.

4. Layer according to claim 3, **characterised in that**:
• the fastening means (11) are in the form of a gripping strip, intended to cooperate with an additional gripping strip forming the reciprocal means (12),
• and/or the fastening means (11) are in the form of a bead of profiled thermoplastic material overmoulding an edge of the reinforcing strip (7), said bead being intended to be arranged in an additional profile forming the reciprocal means (12).

5. Layer according to any one of claims 1 to 4, **characterised in that** the decorative strip (9) is made of thermoplastic sheet, fabric or non-woven material.

6. Layer according to any one of claims 1 to 5, **characterised in that** the decorative strip (9) is attached by an adhesive or by welding.

7. Component (2) of a motor vehicle comprising a support (13) and a layer (1) according to any one of claims 1 to 6, said layer being attached on said support.

8. Component according to claim 7, when it relates to claim 3, **characterised in that** it is in the form of a seat pad, the support (13) of which is in the form of a cushion provided with reciprocal fastening means (12).

9. Component according to claim 7, **characterised in that** it is in the form of a seat pad, the support (13) of which is in the form of a foam cushion at least partly overmoulding the back of the decorative layer (1).
